# EUROPÄISCHE PATENTSCHRIFT

(11) **EP 3 309 358 B1**
(45) Veröffentlichungstag und Bekanntmachung des Hinweises auf die Patenterteilung: **19.06.2019**
(21) Anmeldenummer: 17196261.6
(22) Anmeldetag: 13.10.2017
(51) Int. Cl.: E21D 11/10, B61F 9/00, B60B 17/00

(54) **TRAGRADBAUGRUPPE**
CARRYING WHEEL ASSEMBLY
MODULE DE ROUE PORTEUSE

(30) Priorität: 14.10.2016 DE 102016220046
(43) Veröffentlichungstag der Anmeldung: 18.04.2018
(73) Patentinhaber: PERI GMBH, 89264 Weissenhorn (DE)
(72) Erfinder: Sturm, Florian, 89299 Unterroth (DE); Schnepf, Manfred, 89297 Roggenburg (DE)
(74) Vertreter: Kohler Schmid Möbus Patentanwälte

(56) Entgegenhaltungen:
- DE-A1-102013 104 844
- DE-B- 1 064 710
- DE-B3-102005 047 954
- DE-C- 388 230
- JP-A- H0 672 329
- JP-A- H0 853 063
- JP-A- H0 858 586

## Beschreibung

Die Erfindung betrifft eine Tragradbaugruppe für eine Verfahranordnung. Die Erfindung betrifft ferner eine solche Verfahranordnung, insbesondere in Form eines Tunnelschalwagens oder eines Fahrgerüsts.

Auf Baustellen müssen verschiedentlich schwere Lasten präzise verfahren werden. Beispielsweise sind Tunnelschalwagen oder Fahrgerüste für ihren jeweiligen Einsatz genau auszurichten und wiederholt umzupositionieren.

Es ist hierzu grundsätzlich bekannt, derartige schwere Aufbauten mittels Rollenanordnungen auf Fahrschienen, die zu diesem Zweck verlegt werden, zu verfahren.

Um ein Abspringen der Rollen von den Fahrschienen ("Entgleisen") zu vermeiden, werden verbreitet Spurkranzräder mit ein- oder beidseitigem Spurkranz eingesetzt. Spurkranzräder sind beispielsweise aus der DE 10 2005 047 954 B3, der DE 388 230 C, der JP H08 53063 A, der JP H06 72329 A und der DE 1 064 710 B bekannt geworden. Solche Spurkranzräder sind jedoch sehr schwer und weisen eine große Baubreite auf. Zudem besteht bei gegossenen Spurkranzrädern die Gefahr, dass der Spurkranz im Betrieb abgesprengt wird. Ein Austausch des defekten Spurkranzrades ist auf einer Baustelle nur mit großem Zeit- und Kostenaufwand möglich.

Spurkranzräder mit einseitigem Spurkranz werden mitunter auf speziell geformten Schienenprofilen mit einer Längsnut zum Eingreifen des Spurkranzes eingesetzt. Es kann dann auch mit einem einseitigen Spurkranz eine beidseitige Spurführung erreicht werden. Durch die speziell geformten Schienenprofile erhöhen sich jedoch die Bereitstellungskosten. Zudem bestehen die vorgenannten Probleme der Spurkranzräder fort.

Es ist ferner bekannt, unprofilierte Rollen mittels seitlich an der Schiene abrollender Seitenführungsrollen auf der Schiene zu führen. Derartige Konstruktionen sind jedoch sehr aufwändig und teuer.

Der vorliegenden Erfindung liegt daher die Aufgabe zugrunde, eine Tragradbaugruppe und eine Verfahranordnung anzugeben, die kostengünstig herzustellen sowie flexibel und sicher einsetzbar sind.

Diese Aufgabe wird erfindungsgemäß durch eine Tragradbaugruppe mit den Merkmalen des Patentanspruchs 1 und eine Verfahranordnung gemäß Patentanspruch 13 gelöst. Die Unteransprüche geben zweckmäßige Weiterbildungen an.

Die erfindungsgemäße Aufgabe wird somit gelöst durch eine Tragradbaugruppe, umfassend einen Radträger und ein Rad. Die erfindungsgemäße Tragradbaugruppe ist insbesondere zur Verwendung in einer Verfahranordnung, z. B. in Form eines Tunnelschalwagens oder eines Fahrgerüsts, vorgesehen.

Der Radträger (Rollenbock) der Tragradbaugruppe dient zum Anbinden einer Verbindungsstruktur der Verfahranordnung und zum Abstützen eines Aufbaus der Verfahranordnung, etwa einer Tunnelschalung, eines Gerüsts oder anderer, typischerweise schwerer, Bauhilfskonstruktionen. Das Rad ist an dem Radträger drehbar gelagert. Vorzugsweise ist dazu ein Achsbolzen des Rades an zwei sich beidseits des Rades erstreckenden Aufnahmeelementen des Radträgers gehaltert. Der Radträger kann das Rad im Wesentlichen von oben übergreifen. Erfindungsgemäß weist die Tragradbaugruppe weiterhin einen Führungskäfig mit zwei Seitenteilen auf, der an dem Radträger befestigt ist. Der Führungskäfig dient mit nicht drehbaren Führungsstrukturen links und rechts einer Fahrschiene zur Führung des Rades auf der Fahrschiene.

Richtungsangaben, wie nach unten oder seitlich, beziehen sich in der gesamten Beschreibung und den Patentansprüchen auf eine Gebrauchsstellung der Tragradbaugruppe bzw. der Verfahranordnung, wobei der Führungskäfig an dem Radträger befestigt ist und wobei das Rad mit seiner Lauffläche zumindest teilweise auf eine Fahrschiene aufgesetzt ist.

Vorzugsweise ist der Führungskäfig lösbar an dem Radträger befestigt. Dadurch kann der Führungskäfig auch auf einer Baustelle leicht ausgetauscht werden, etwa falls er beschädigt wurde. Alternativ kann vorgesehen sein, dass der Führungskäfig dauerhaft mit dem Radträger verbunden ist, beispielsweise am Radträger angeschweißt ist. Die Befestigung des Führungskäfigs kann über eines der Seitenteile erfolgen. Vorzugsweise sind beide Seitenteile an dem Radträger, insbesondere an dessen Aufnahmeelementen, befestigt. Bevorzugt erfolgt eine starre Verbindung der Seitenteile mit dem Radträger.

An den Seitenteilen ist jeweils eine Führungsstruktur ausgebildet. Beidseits des Rades ragen die Führungsstrukturen jeweils über eine Lauffläche des Rades hinaus nach unten. Insbesondere sind die Führungsstrukturen im montierten Zustand von dem Radträger abgewandt angeordnet, d. h. die Führungsstrukturen ragen von dem Radträger weg. Wenn das Rad auf eine Fahrschiene aufgesetzt ist, sind die Führungsstrukturen mithin seitlich neben einem Fahrprofil der Fahrschiene angeordnet. Das Rad kann oberseitig auf dem Fahrprofil der Fahrschiene abrollen. Die Führungsstrukturen werden seitlich neben dem Fahrprofil mitbewegt. Mit anderen Worten erstrecken sich die Führungsstrukturen bis unterhalb des Latsches (der Kontaktfläche) des Rades auf der Fahrschiene. Wenn das Rad von der Fahrschiene abzulaufen (abzuspringen) droht, kommt eine der Führungsstrukturen in Kontakt mit der Fahrschiene, sodass das Rad auf der Fahrschiene geführt wird. Die betreffende Führungsstruktur gleitet dabei an der Fahrschiene, insbesondere an deren Fahrprofil, entlang. Bei den in der Baustellenpraxis üblichen Verfahrgeschwindigkeiten von typischerweise höchstens 3 m/min tritt dabei kein nennenswerter Verschleiß auf.

Indem die Führungsstrukturen beidseits des Rades angeordnet sind, wird eine Führung des Rades in beiden seitlichen Richtungen auf der Fahrschiene bewirkt. Dies ist besonders vorteilhaft, da sich eine Vefahranordnung mit der Tragradbaugruppe im Betrieb merklich verformen kann und da Lagetoleranzen zwischen nebeneinander verlegten Fahrschienen in der Baustellenpraxis oft relativ groß sind. Da die Führung des Rades auf der Fahrschiene durch den Führungskäfig sichergestellt wird, kann das Rad selbst besonders einfach ausgeführt sein. Dadurch ergeben sich Kosteneinsparungen. Insbesondere kann das Rad unprofiliert gestaltet sein, d. h. eine umfangsmäßige Außenfläche des Rades kann näherungsweise zylindermantelförmig sein. Anders formuliert kann das Rad spurkranzfrei ausgebildet sein. Im Vergleich zu einem Spurkranzrad kann bei der erfindungsgemäßen Tragradbaugruppe auch eine Gewichtseinsparung erreicht werden. Es hat sich gezeigt, dass das Rad und der Führungskäfig der erfindungsgemäßen Tragradbaugruppe gegenüber einem vergleichbaren Spurkranzrad mit beidseitigem Spurkranz ca. 30% leichter ausgeführt werden können.

Eine lichte Weite zwischen den Führungsstrukturen ist typischerweise wenigstens 5%, bevorzugt wenigstens 10%, und vorzugsweise höchstens 25%, besonders bevorzugt höchstens 20%, größer als eine Breite des Fahrprofils der Fahrschiene. Insbesondere kann die lichte Weite zwischen den Führungsstrukturen näherungsweise ±10% einer Breite des Rades oder einer Breite einer Lauffläche des Rades entsprechen. Dadurch wird eine sichere Führung des Rades auf der Fahrschiene bewirkt. Gleichzeitig verbleibt ein ausreichend großes Spiel zwischen den Führungsstrukturen und der Fahrschiene, um Lagetoleranzen der Fahrschiene oder Verformungen einer Verfahranordnung mit der Tragradbaugruppe ausgleichen zu können.

Vorzugsweise beträgt ein Durchmesser des Rades wenigstens 200mm, besonders bevorzugt wenigstens 250mm. Vorzugsweise beträgt die Breite der Lauffläche des Rades wenigstens 60mm, besonders bevorzugt wenigstens 75mm. Eine Tragfähigkeit (statische Belastbarkeit) der Tragradbaugruppe beträgt vorzugsweise wenigstens 2t (20kN), besonders bevorzugt wenigstens 2,5t (25kN). Zur drehbaren Lagerung des Rades auf dem Achsbolzen werden vorzugsweise Pendelrollenlager verwendet. Das Rad kann massiv ausgebildet sein. Das Rad besteht vorteilhafterweise aus Stahl.

Vorzugsweise sind die beiden Seitenteile des Führungskäfigs als voneinander separate Bauteile ausgebildet. Dadurch kann der Führungskäfig besonders einfach montiert werden, insbesondere auch wenn das Rad auf eine Fahrschiene aufgesetzt ist und der Radträger einen Aufbau trägt.

Der Führungskäfig bildet einen sich von dem Rad weg erweiternden Einlauftrichter aus, bevorzugt bildet der Führungskäfig vor und hinter dem Rad je einen sich erweiternden Einlauftrichter aus. Im montierten Zustand erweitert sich der Einlauftrichter entlang einer Fahrtrichtung des Rades in horizontaler Richtung. Durch den Einlauftrichter kann die Führung des Rades an Stößen von Schienenstücken der Fahrschienen verbessert werden. Beim Heranfahren an den Stoß gelangt ein mit Versatz zu einem ersten Schienenstück verlegtes zweites Schienenstück zunächst in den erweiterten Teil des Einlauftrichters. Beim weiteren Überfahren des Stoßes wird das Rad dann durch den sich zu dem Rad hin verengenden Einlauftrichter zunehmend relativ zu dem zweiten Schienenstück ausgerichtet.

Die Seitenteile können je zumindest einen Einlaufabschnitt aufweisen, der jeweils den Einlauftrichter mit ausbildet. Ein Teil (eine Seite) des Einlauftrichters wird dann jeweils durch die Seitenteile ausgebildet. Dies vereinfacht den Aufbau des Führungskäfigs. Ein jeweiliger Einlaufabschnitt kann sich zumindest abschnittsweise bis unterhalb eines Fahrprofils einer Fahrschiene, auf dem das Rad abrollt, erstrecken.

Die Seitenteile können jeweils ein Blechbiegeteil umfassen, an dem sowohl die Führungsstruktur als auch der Einlaufabschnitt ausgebildet sind. Dies senkt die Fertigungskosten. Ferner kann ein steifer Führungskäfig erhalten werden, insbesondere wenn das Blechbiegeteil mehrfach abgewinkelt ist. Die Führungsstruktur ist vorzugsweise zu dem Rad hin gebogen. Der Einlaufabschnitt ist typischerweise nach außen aufgebogen. Bevorzugt weist das Blechbiegeteil vorne und hinten (in Bezug auf eine Fahrtrichtung des Rades bei montiertem Führungskäfig) je einen Einlaufabschnitt auf.

In einer besonders bevorzugten Ausführungsform sind die beiden Seitenteile durch zwei Querverstrebungen verbunden, wobei eine der Querverstrebungen vor und eine der Querverstrebungen hinter dem Rad verläuft. Dadurch wird ein steiferer Führungskäfig erhalten. Dies kann die Führung des Rades auf einer Fahrschiene verbessern. Zudem können die Querverstrebungen verhindern, dass Körperteile, insbesondere Füße oder Hände von Arbeitern, oder auf der Fahrschiene liegende Gegenstände von dem Rad überfahren werden. Vorzugsweise verlaufen die Querverstrebungen knapp oberhalb der Fahrschiene, etwa in einem Abstand von höchstens 30mm, bevorzugt höchstens 20mm, wenn die Tragradbaugruppe auf die Fahrschiene aufgesetzt ist. Dies verbessert die Steifigkeit und den Überfahrschutz weiter.

Vorzugsweise ist der Führungskäfig an dem Radträger lösbar befestigt, insbesondere angeschraubt. Dadurch ist eine besonders einfache und schnelle Montage des Führungskäfigs, auch auf einer Baustelle, möglich. Zudem kann eine stabile Anbindung erhalten werden. Das Rad kann bei demontiertem Führungskäfig auch in einem U-Profil als Fahrschiene eingesetzt werden. Die Seitenführung wird dann von den seitlichen Schenkeln des U-Profils übernommen. Durch einen wahlweise befestigbaren bzw. demontierbaren Führungskäfig werden mithin zusätzliche Einsatzmöglichkeiten für die Tragradbaugruppe eröffnet.

Das Rad kann auf einem Achsbolzen drehbar an dem Radträger gelagert sein. Insbesondere kann sich der Achsbolzen an zwei sich beidseits des Rades erstreckenden Aufnahmeelementen des Radträgers abstützen. Vorzugsweise weist der Achsbolzen eine Verdickung auf, die insbesondere seitlich über den Radträger vorsteht, wobei zwischen dem Radträger und der Verdickung eine Nut ausgebildet wird. Der Führungskäfig kann in die Nut eingreifen. Durch den Eingriff des Führungskäfigs in die Nut kann eine bessere, insbesondere steifere, Anbindung des Führungskäfigs an den Radträger erreicht werden. Der Eingriff des Führungskäfigs in die Nut kann schnell und vorzugsweise werkzeuglos eingerichtet werden. Um eine Nut definierter Breite zwischen der Verdickung und dem Radträger einzurichten, kann ein Distanzstück zwischen der Verdickung und dem Radträger auf dem Achsbolzen angeordnet werden. Vorzugsweise ist an den beiden Enden des Achsbolzens eine vorstehende Verdickung an dem Achsbolzen ausgebildet und eine Nut zwischen der Verdickung und dem Radträger eingerichtet. Der Führungskäfig kann dann beidseitig in die jeweilige Nut eingreifen. Der Achsbolzen kann einstückig oder mehrteilig ausgeführt sein. Die Verdickung kann einenends von einem Kopf und anderenends von einem Fixierelement, z. B. einer aufgeschraubten Mutter, des Achsbolzens ausgebildet werden.

In einer besonders bevorzugten Weiterbildung ist vorgesehen, dass zumindest eines der Seitenteile des Führungskäfigs eine sich verjüngende Durchgangsausnehmung aufweist, durch die in einer ersten Stellung zur Montage des Seitenteils die Verdickung des Achsbolzens hindurchführbar ist, wobei in einer zweiten Stellung, in der das Seitenteil an dem Radträger befestigt ist, das Seitenteil in die Nut eingreift, sodass die Verdickung von dem Seitenteil hintergriffen wird. Dies erlaubt eine besonders einfache und schnelle Montage des Führungskäfigs an dem Radträger. Die Seitenteile können jeweils in der ersten Stellung über die Verdickung geschoben werden. Sodann werden die Seitenteile in die zweite Stellung überführt, wobei der Hintergriff zwischen den Seitenteilen und der jeweiligen Verdickung eingerichtet wird. Der Achsbolzen muss ohnehin steif ausgeführt und stabil an den Radträger angekoppelt werden, sodass auf diese Weise mit einfachen Mitteln eine steife und stabile Befestigung des Führungskäfigs bewirkt werden kann. Vorzugsweise werden die Seitenteile in der zweiten Stellung durch weitere Befestigungsmittel, etwa je eine Schraube, an dem Radträger fixiert. Die sich verjüngende Durchgangsausnehmung kann in der Form eines Langlochs mit veränderlicher Breite ausgebildet sein.

Die Führungsstrukturen können jeweils einen, insbesondere geradlinig verlaufenden, Kontaktabschnitt zum Abgleiten an der Fahrschiene aufweisen, insbesondere wobei die Kontaktabschnitte der beiden Führungsstrukturen parallel zueinander und parallel zu einer Radebene des Rades verlaufen, wenn der Führungskäfig am Radträger befestigt ist. Dadurch wird ein Linienkontakt zwischen den Führungsstrukturen und einer Fahrschiene für das Rad ermöglicht. Dies reduziert den Verschleiß der Führungsstrukturen im Bereich der Kontaktabschnitte. Ferner kann das Rad durch die geradlinigen Kontaktabschnitte beim Anlaufen der Kontaktabschnitte gegen die Fahrschiene parallel zu der Fahrschiene ausgerichtet werden.

Vorzugsweise ist der Führungskäfig zweifach spiegelsymmetrisch, insbesondere symmetrisch zu einer Mittelebene und symmetrisch zu einer Querebene, ausgebildet. Dies senkt die Fertigungskosten und vereinfacht die Montage des Führungskäfigs, da die beiden Seitenteile baugleich sind.

Im befestigten Zustand des Führungskäfigs entspricht die Mittelebene vorzugsweise einer Radebene des Rades, sodass das Rad mittig in dem Führungskäfig angeordnet ist. Eine Radachse des Rades verläuft typischerweise in der Querebene.

Die Tragradbaugruppe kann weiterhin eine Räumvorrichtung zum Räumen der Fahrschiene umfassen. Die Räumvorrichtung ist vorzugsweise an dem Radträger und/oder dem Führungskäfig befestigt. Durch die Räumvorrichtung können auf der Fahrschiene liegende Gegenstände oder grobe Verschmutzungen beiseitegeschafft, d. h. von der Fahrschiene heruntergeschoben oder abgestreift, werden. Im Falle der Verwendung eines U-Profils als Fahrschiene können auch innerhalb des Profils der Fahrschiene liegende Gegenstände oder große Schmutzpartikel aus dem Profil ausgeräumt, d. h. ausgehoben und seitlich ausgeworfen, werden. Dadurch wird ein leichteres und sichereres Verfahren der Tragradbaugruppe auf der Fahrschiene ermöglicht und die Gefahr des Entgleisens weiter verringert.

In den Rahmen der vorliegenden Erfindung fällt auch eine Verfahranordnung. Die erfindungsgemäße Verfahranordnung kann insbesondere in Form eines Tunnelschalwagens oder eines Fahrgerüsts eingesetzt werden. Die Verfahranordnung umfasst wenigstens vier erfindungsgemäße Tragradbaugruppen für zwei beabstandet voneinander angeordnete Fahrschienen. Die Fahrschienen verlaufen typischerweise in einem näherungsweise gleich bleibenden Abstand zueinander. Die Fahrschienen können mehrere hintereinanderliegend angeordnete Schienenstücke umfassen. Als Fahrschienen können insbesondere Kranschienen, z. B. nach DIN 536, verwendet werden. Die Verfahranordnung umfasst weiterhin eine Verbindungsstruktur, die die Radträger der Tragradbaugruppen verbindet, sodass auf jeder der Fahrschienen jeweils die Räder von zwei der Tragradbaugruppen anordenbar sind. Durch die Führungsstrukturen der Führungskäfige der Tragradbaugruppen wird die Verfahranordnung sicher auf den Fahrschienen geführt. Zur Abstützung besonders schwerer Aufbauten der Verfahranordnung können mehr als vier erfindungsgemäße Tragradbaugruppen eingesetzt werden.

Weitere Merkmale und Vorteile der Erfindung ergeben sich aus der nachfolgenden Beschreibung eines Ausführungsbeispiels der Erfindung, aus den Patentansprüchen sowie aus den Figuren der Zeichnung, die erfindungswesentliche Einzelheiten zeigt.

Die in der Zeichnung gezeigten Merkmale sind derart dargestellt, dass die erfindungsgemäßen Besonderheiten deutlich sichtbar gemacht werden können.

Es zeigen:
- Fig. 1: eine teilweise geschnittene Stirnseitenansicht eines Tunnels mit einer Verfahranordnung mit mehreren Tragradbaugruppen;
- Fig. 2: eine isometrische Ansicht einer Tragradbaugruppe der Vefahranordnung gemäß Fig. 1;
- Fig. 3: eine weitere isometrische Ansicht der Tragradbaugruppe aus Fig. 2 auf zueinander versetzten Schienenstücken;
- Fig. 4: eine teilweise geschnittene Seitenansicht der Tragradbaugruppe aus Fig. 2;
- Fig. 5: eine teilweise geschnittene Stirnseitenansicht der Tragradbaugruppe aus Fig. 2;
- Fign. 6a - 6c: Stirnseitenansichten der Tragradbaugruppe gemäß Fig. 5, bei deren Montage;
- Fig. 7: eine Draufsicht auf ein Seitenteil der Tragradbaugruppe gemäß Fig. 6a; und
- Fig. 8: eine Stirnseitenansicht der Tragradbaugruppe gemäß Fig. 2 ohne Seitenteile, wobei ein Rad der Tragradbaugruppe in einer U-profilförmigen Fahrschiene geführt ist.

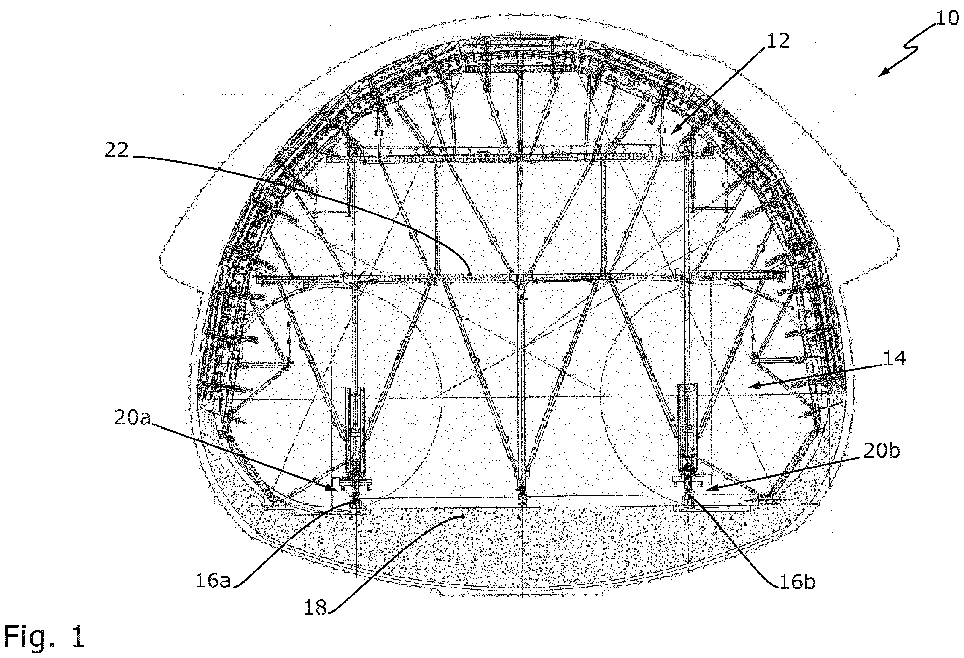

**Fig.** 1 zeigt einen Tunnel **10** mit einer verfahrbar im Tunnel angeordneten Verfahranordnung **12,** hier in Form eines Schalungswagens, insbesondere eines Tunnelschalwagens. Der Tunnelschalwagen wird eingesetzt, um die Innenseite des Tunnels 10 mit Beton zu versehen. Die Verfahranordnung 12 weist ein Fahrgestell **14** auf, das in Längsrichtung des Tunnels 10 auf Fahrschienen **16a, 16b** verfahrbar ist. Die Fahrschienen 16a, 16b sind parallel zueinander auf einem Boden **18** des Tunnels 10 verlegt. Die Verfahranordnung 12 weist mehrere Tragradbaugruppen auf, von denen in Fig. 1 die Tragradbaugruppen **20a, 20b** sichtbar und mit einem Bezugszeichen versehen sind. Räder der Tragradbaugruppen 20a, 20b sind in Fig. 1 nicht sichtbar. Die Tragradbaugruppen 20a, 20b sind über eine Verbindungsstruktur **22** miteinander verbunden.

Die Tragradbaugruppen 20a, 20b müssen derart ausgebildet sein, dass die Verfahranordnung 14 nicht quer zur Fahrtrichtung (die in Fig.1 senkrecht zur Papierebene verläuft) von den Fahrschienen 16a, 16b entgleist. Gleichzeitig sollen die Tragradbaugruppen 20a, 20b konstruktiv einfach und kostengünstig ausbildbar sein. Um das Gesamtgewicht der Verfahranordnung 12 zu reduzieren, sollen die Tragradbaugruppen 20a, 20b weiterhin besonders leicht ausgebildet sein. Schließlich sollen die Tragradbaugruppen 20a, 20b wartungsarm und vielseitig einsetzbar sein.

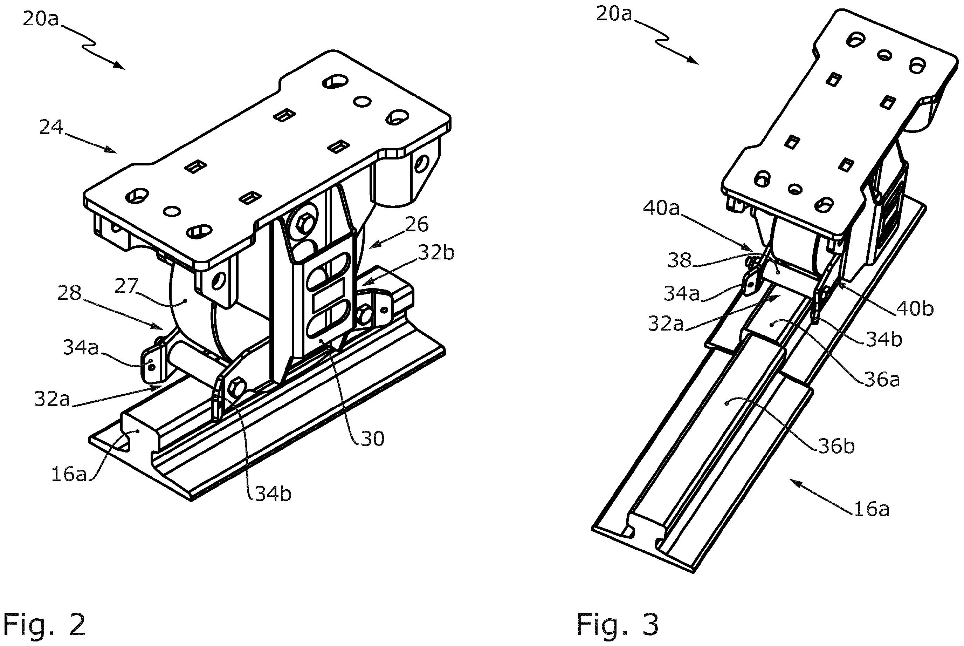

**Fig.** 2 zeigt eine Tragradbaugruppe 20a, die die vorgenannten Anforderungen erfüllt. Die Tragradbaugruppe 20a weist einen Radträger **24** sowie ein drehbar am Radträger 24 angeordnetes Rad **26** mit einer Lauffläche **27** auf. Am Radträger 24 ist ein Führungskäfig **28** reversibel lösbar angeordnet. Der Führungskäfig 28 verhindert ein Abspringen des Rades 26 von der Fahrschiene 16a. Da die Verfahranordnung 12 (siehe Fig. 1) nur sehr langsam auf den Fahrschienen 16a, 16b (siehe Fig. 1) bewegt wird, ist der Führungskäfig 28 statisch ausgebildet. Der am Führungskäfig 28 auftretende Verschleiß ist dadurch tolerierbar. Durch den Führungskäfig 28 kann das Rad 26 zylinderförmig ausgebildet sein. Das Rad 26 weist keinen Spurkranz auf. Trotz des Führungskäfigs 28 wird dadurch eine große Gewichtseinsparung erzielt.

Der Führungskäfig weist an jeder Seite einen Schutzkäfig auf, von denen in Fig. 2 ein Schutzkäfig **30** sichtbar ist.

Der Führungskäfig 28 weist weiterhin Einlauftrichter **32a, 32b** auf. Die Einlauftrichter 32a, 32b sind vorzugsweise gleich ausgebildet. Wie anhand des Einlauftrichters 32a ersichtlich ist, weist dieser gebogene Bereiche **34a, 34b** auf. Die gebogenen Bereiche 34a, 34b bilden Einlaufabschnitte des Einlauftrichters 32a.

**Fig. 3** zeigt die Tragradbaugruppe 20a an einem weiteren Abschnitt der Fahrschiene 16a. Schienenstücke **36a, 36b** der Fahrschiene 16a sind leicht versetzt zueinander angeordnet. Der Einlauftrichter 32a sorgt dabei für einen sicheren Übergang vom Schienenstück 36a auf das Schienenstück 36b.

Zwischen den gebogenen Bereichen 34a, 34b des Einlauftrichters 32a weist dieser eine Querverstrebung **38** auf. Die Querverstrebung 38 dient dem Zusammenhalt der gebogenen Bereiche 34a, 34b beim Übergang der Tragradbaugruppe 20a vom Schienenstück 36a auf das Schienenstück 36b. Die gebogenen Bereiche 34a, 34b sind jeweils Teil eines Blechbiegeteils **40a, 40b.** Weiterhin dient die Querverstrebung 38 als Überfahrschutz, beispielsweise zum Fußschutz, um Quetschungen durch die Tragradbaugruppe 20a zu verhindern.

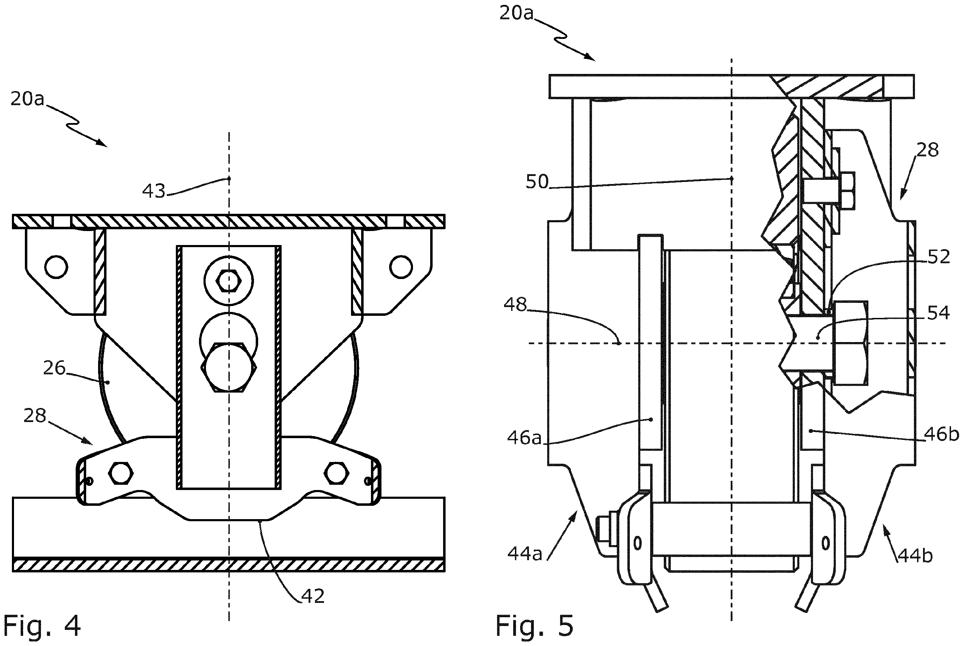

**Fig. 4** zeigt die Tragradbaugruppe 20a in einer teilweise geschnittenen Ansicht. Aus Fig. 4 ist ersichtlich, dass der Führungskäfig 28 einen Kontaktabschnitt **42** aufweist, der über die Lauffläche 27 (siehe Fig. 2) des Rades 26 nach unten ragt. Wie in Fig. 4 dargestellt, ist dieser Kontaktabschnitt 42 bevorzugt geradlinig ausgebildet.

Eine Querebene **43** verläuft entlang der Radachse 48 und senkrecht zur Fahrtrichtung der Tragradbaugruppe 20a. Der Führungskäfig 28 ist hier symmetrisch zur Querebene 43 ausgebildet. Dadurch wird sowohl beim Vorwärts- als auch Rückwärtsfahren eine identische Führungswirkung durch den Führungskäfig 28 erzielt.

**Fig. 5** zeigt eine weitere, teilweise geschnittene Ansicht der Tragradbaugruppe 20a. Fig. 5 zeigt, dass der Führungskäfig 28 zwei Seitenteile **44a, 44b** aufweist. Die Seitenteile 44a, 44b sind an Aufnahmeelementen **46a, 46b** angeordnet. Die Anordnung der Seitenteile 44a, 44b erfolgt dabei vorzugsweise jeweils senkrecht zur Radachse **48** des Rades 26.

Die Seitenteile 44a, 44b sind spiegelsymmetrisch zu einer mittigen Symmetrieebene **50** der Tragradbaugruppe 20a ausgebildet. Die mittige Symmetrieebene 50 verläuft dabei senkrecht zur Radachse 48 und entspricht der Radebene. Die Symmetrie der Seitenteile 44a, 44b zu der Symmetrieebene 50 kann alternativ oder zusätzlich zur Spiegelsymmetrie zur Querebene 43 (siehe Fig. 4) eingerichtet sein. Die symmetrische, insbesondere doppelsymmetrische, Ausbildung des Führungskäfigs 28 erleichtert signifikant die Fertigung und Montage des Führungskäfigs 28.

Die Seitenteile 44a, 44b sind jeweils über ein Distanzstück **52** an einem Achsbolzen **54** angeordnet. Die Distanzstücke 52 sind jeweils in Form einer Hülse ausgebildet.

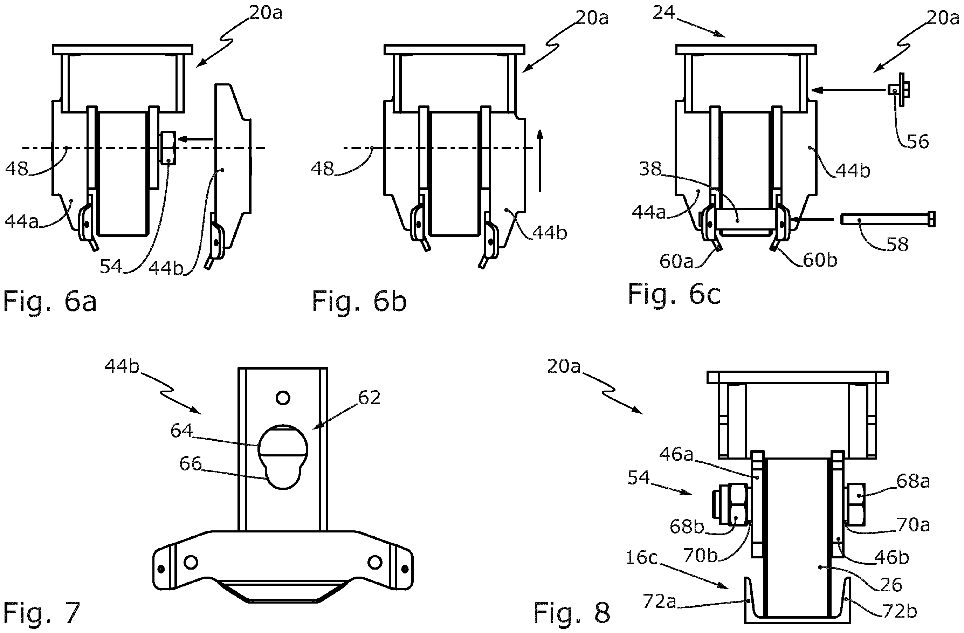

Die **Fign. 6a, 6b** und **6c** zeigen die Montage eines Seitenteils 44b an der Tragradbaugruppe 20a, wobei die Montage des Seitenteils 44a analog erfolgt.

Gemäß Fig. 6a wird das Seitenteil 44b der Tragradbaugruppe 20a in eine erste Stellung auf den Achsbolzen 54 aufgeschoben. Das Aufschieben erfolgt dabei in Richtung der Radachse 48.

Gemäß Fig. 6b wird das Seitenteil 44 anschließend senkrecht zur Radachse 48 in eine zweite Stellung angehoben. Dies ist in Fig. 6b durch einen Pfeil angedeutet.

Gemäß Fig. 6c wird anschließend das Seitenteil 44b mit einer Schraube **56** am Radträger 24 fixiert. Anschließend, zuvor oder gleichzeitig werden die Querverstrebungen 38 zwischen den Seitenteilen 44a, 44b durch eine Schraube **58** fixiert.

In dem Verfahren zur Montage zumindest eines Seitenteils 44a, 44b wird ein eigenständiger erfinderischer Aspekt gesehen.

Der fertig montierte Führungskäfig 28 weist zwei frei nach unten vorragende Führungsstrukturen **60a, 60b** auf. Die Führungsstrukturen 60a, 60b weisen jeweils einen Kontaktabschnitt 42 (siehe Fig. 4) auf.

**Fig. 7** zeigt das Seitenteil 44b. Aus Fig. 7 ist ersichtlich, dass das Seitenteil 44b eine sich verjüngende Durchgangsausnehmung **62** aufweist. Ein erster Teil **64** der sich verjüngenden Durchgangsausnehmung 62 weist eine größere lichte Weite auf als ein zweiter Teil **66.** Der Achsbolzen 54 (siehe Fig. 5) ist dabei durch den ersten Teil 64 durchführbar und abschnittsweise vom zweiten Teil 66 hintergreifbar. Die sich verjüngende Durchgangsausnehmung 62 ist - wie in Fig. 7 dargestellt - bevorzugt schlüssellochförmig ausgebildet.

**Fig. 8** zeigt die Tragradbaugruppe 20a mit demontierten Seitenteilen 44a, 44b (vgl. Fig. 5). Fig. 8 verdeutlicht, dass der Achsbolzen 54 an seinen beiden axialen Enden jeweils eine Verdickung **68a, 68b** aufweist. Die Verdickung 68a ist dabei in Form eines Schraubenkopfes und die Verdickung 68b in Form einer Schraubenmutter ausgebildet. Zwischen der Verdickung 68a und dem Aufnahmeelement 46b ist eine Nut **70a** zur teilweisen Aufnahme des Seitenteils 44b (siehe Fig. 5) ausgebildet. Der Boden der Nut 70a wird durch die äußere Umfangsfläche des Distanzstücks 52 (siehe Fig. 5) ausgebildet. Ebenso ist zwischen der Verdickung 68b und dem Aufnahmeelement 46a eine Nut **70b** zur teilweisen Aufnahme des Seitenteils 44a (siehe Fig. 5) ausgebildet.

Fig. 8 verdeutlicht weiterhin, dass die gezeigte Tragradbaugruppe 20a gegenüber einem Spurkranzrad den weiteren Vorteil aufweist, dass das Rad 26 in einer Fahrschiene 16c führbar ist, wobei die Fahrschiene 16c im Querschnitt eine U-Form aufweist. Das Rad 26 wird dabei durch seitliche Schenkel 72a, 72b der Fahrschiene 16c geführt. Die Möglichkeit, die Seitenteile 44a, 44b (siehe Fig. 5) abnehmen zu können, erweitert somit signifikant die Einsatzmöglichkeiten der Tragradbaugruppe 20a.

Unter Vornahme einer Zusammenschau aller Figuren der Zeichnung betrifft die Erfindung zusammenfassend eine Tragradbaugruppe 20a, 20b mit einem an einem Radträger 24 geführten Rad 26. Die Tragradbaugruppe 20a, 20b weist links und rechts des Rades 26 statisch vorstehende Führungsstrukturen 60a, 60b zur Führung der Tragradbaugruppe 20a, 20b an einer Fahrschiene 16a - 16b auf. Das Rad 26 weist bevorzugt eine ebene Lauffläche 27 ohne Vorsprünge auf. Die Führungsstrukturen 60a, 60b sind vorzugsweise jeweils Teil eines abnehmbaren Seitenteils 44a, 44b. Die Seitenteile 44a, 44b können seitlich an den Radträger 24 montierbar sein. Vorzugsweise hintergreifen die Seitenteile 44a, 44b teilweise einen Abschnitt eines Achsbolzens 54 zur Lagerung des Rades 26.

## Patentansprüche

1. Tragradbaugruppe (20a, 20b), für eine Verfahranordnung (12) in Form eines Tunnelschalwagens oder eines Fahrgerüsts, umfassend
- einen Radträger (24) und
- ein Rad (26),
wobei das Rad (26) drehbar an dem Radträger (24) gelagert ist, wobei die Tragradbaugruppe (20a, 20b) weiterhin einen Führungskäfig (28) mit zwei Seitenteilen (44a, 44b) umfasst, der an dem Radträger (24) befestigt ist, wobei an den Seitenteilen (44a, 44b) jeweils eine starre Führungsstruktur (60a, 60b) angeordnet oder ausgebildet ist, und wobei beidseits des Rades 26 die Führungsstrukturen (60a, 60b) jeweils über eine Lauffläche (27) des Rades (26) hinaus nach unten ragen, um ein Entgleisen der Tragradbaugruppe (20a, 20b) von einer Fahrschiene zu verhindern, **dadurch gekennzeichnet, dass** der Führungskäfig (28) einen sich von dem Rad (26) weg erweiternden Einlauftrichter (32a, 32b) ausbildet.

2. Tragradbaugruppe nach Anspruch 1 **dadurch gekennzeichnet, dass** die beiden Seitenteile (44a, 44b) des Führungskäfigs (28) als voneinander separate Bauteile ausgebildet sind.

3. Tragradbaugruppe nach einem der vorhergehenden Ansprüche, **dadurch gekennzeichnet, dass** der Führungskäfig (28) vor und hinter dem Rad (26) je einen sich erweiternden Einlauftrichter (32a, 32b) ausbildet.

4. Tragradbaugruppe nach einem der vorhergehenden Ansprüche, **dadurch gekennzeichnet, dass** die Seitenteile (44a, 44b) je zumindest einen Einlaufabschnitt aufweisen, der jeweils den Einlauftrichter (32a, 32b) mit ausbildet.

5. Tragradbaugruppe nach Anspruch 4, **dadurch gekennzeichnet, dass** die Seitenteile (44a, 44b) jeweils ein Blechbiegeteil (40a, 40b) umfassen, an dem sowohl die Führungsstruktur (60a, 60b) als auch der Einlaufabschnitt ausgebildet sind.

6. Tragradbaugruppe nach einem der vorhergehenden Ansprüche, **dadurch gekennzeichnet, dass** die beiden Seitenteile (44a, 44b) durch zwei Querverstrebungen (38) verbunden sind, wobei eine der Querverstrebungen (38) vor und eine der Querverstrebungen (38) hinter dem Rad (26) verläuft.

7. Tragradbaugruppe nach einem der vorhergehenden Ansprüche, **dadurch gekennzeichnet, dass** der Führungskäfig (28) an dem Radträger (24) lösbar befestigt, insbesondere angeschraubt, ist.

8. Tragradbaugruppe nach einem der vorhergehenden Ansprüche, **dadurch gekennzeichnet, dass** das Rad (26) auf einem
Achsbolzen (54) drehbar an dem Radträger (24) gelagert ist, dass der Achsbolzen (54) eine Verdickung (68a, 68b) aufweist, wobei zwischen dem Radträger (24) und der Verdickung (68a, 68b) eine Nut (70) ausgebildet ist, und dass der Führungskäfig (28) in die Nut (70) eingreift.

9. Tragradbaugruppe nach Anspruch 8, **dadurch gekennzeichnet, dass** zumindest eines der Seitenteile (44a, 44b) des Führungskäfigs (28) eine sich verjüngende Durchgangsausnehmung (62) aufweist, durch die in einer ersten Stellung zur Montage des Seitenteils (44a, 44b) die Verdickung (68a, 68b) des Achsbolzens (54) hindurchführbar ist, und dass in einer zweiten Stellung, in der das Seitenteil (44a, 44b) an dem Radträger (24) befestigt ist, das Seitenteil (44a, 44b) in die Nut (70) eingreift, sodass die Verdickung (68a, 68b) von dem Seitenteil (44a, 44b) hintergriffen wird.

10. Tragradbaugruppe nach einem der vorhergehenden Ansprüche, **dadurch gekennzeichnet, dass** die Führungsstrukturen (60a, 60b) jeweils einen Kontaktabschnitt (42) zum Abgleiten an der Fahrschiene (16a - 16b) aufweisen, insbesondere wobei die Kontaktabschnitte (42) der beiden Führungsstrukturen (60a, 60b) parallel zueinander und parallel zu einer Radebene des Rades (26) verlaufen, wenn der Führungskäfig (28) am Radträger (24) befestigt ist.

11. Tragradbaugruppe nach einem der vorhergehenden Ansprüche, **dadurch gekennzeichnet, dass** der Führungskäfig (28) zweifach spiegelsymmetrisch, insbesondere symmetrisch zu einer Mittelebene (50) und symmetrisch zu einer Querebene (43), ausgebildet ist.

12. Tragradbaugruppe nach einem der vorhergehenden Ansprüche, **dadurch gekennzeichnet, dass** die Tragradbaugruppe (20a, 20b) weiterhin eine Räumvorrichtung zum Räumen der Fahrschiene (16a - 16c) umfasst, wobei die Räumvorrichtung an dem Radträger (24) und/oder dem Führungskäfig (28) befestigt ist.

13. Verfahranordnung (12) in Form eines Tunnelschalwagens oder eines Fahrgerüsts, umfassend
- wenigstens vier Tragradbaugruppen (20a, 20b) nach einem der vorhergehenden Ansprüche, und
- eine Verbindungsstruktur (22), die die Radträger (24) der Tragradbaugruppen (20a, 20b) verbindet, sodass auf jeder der Fahrschienen (16a - 16b) jeweils die Räder (26) von zwei der Tragradbaugruppen (20a, 20b) anordenbar sind.

## Claims

1. Support wheel assembly (20a, 20b), for a transport arrangement (12) in the form of a tunnel formwork carriage or a mobile scaffold, comprising
- a wheel carrier (24) and
- a wheel (26),
the wheel (26) being rotatably mounted on the wheel carrier (24), the support wheel assembly (20a, 20b) further comprising a guide cage (28) having two side parts (44a, 44b) which is fastened to the wheel carrier (24), a rigid guide structure (60a, 60b) being arranged or formed on each side part (44a, 44b), and the guide structures (60a, 60b) on both sides of the wheel (26) each projecting downward beyond a running surface (27) of the wheel (26) in order to prevent the support wheel assembly (20a, 20b) from being derailed from a rail, **characterized in that** the guide cage (28) forms an inlet funnel (32a, 32b) which widens in the direction away from the wheel (26).

2. Support wheel assembly according to claim 1, **characterized in that** the two side parts (44a, 44b) of the guide cage (28) are designed as components which are separate from one another.

3. Support wheel assembly according to either of the preceding claims, **characterized in that** the guide cage (28) forms a widening inlet funnel (32a, 32b) both in front of and behind the wheel (26).

4. Support wheel assembly according to any of the preceding claims, **characterized in that** the side parts (44a, 44b) each have at least one inlet portion which forms the particular inlet funnel (32a, 32b).

5. Support wheel assembly according to claim 4, **characterized in that** the side parts (44a, 44b) each comprise a bent sheet-metal part (40a, 40b) on which both the guide structure (60a, 60b) and the inlet portion are formed.

6. Support wheel assembly according to any of the preceding claims, **characterized in that** the two side parts (44a, 44b) are connected by two cross members (38), one of the cross members (38) extending in front of the wheel (26) and one of the cross members (38) extending behind the wheel.

7. Support wheel assembly according to any of the preceding claims, **characterized in that** the guide cage (28) is detachably fastened to the wheel carrier (24), in particular screwed on.

8. Support wheel assembly according to any of the preceding claims, **characterized in that** the wheel (26) is mounted on the wheel carrier (24) so as to be rotatable on an axle bolt (54), **in that** the axle bolt (54) has a thickening (68a, 68b), a groove (70) being formed between the wheel carrier (24) and the thickening (68a, 68b), and **in that** the guide cage (28) engages in the groove (70).

9. Support wheel assembly according to claim 8, **characterized in that** at least one of the side parts (44a, 44b) of the guide cage (28) has a tapered through-recess (62) through which, in a first position for mounting the side part (44a, 44b), the thickening (68a, 68b) of the axle bolt (54) can be guided, and **in that**, in a second position in which the side part (44a, 44b) is fastened to the wheel carrier (24), the side part (44a, 44b) engages in the groove (70) so that the side part (44a, 44b) engages behind the thickening (68a, 68b).

10. Support wheel assembly according to any of the preceding claims, **characterized in that** the guide structures (60a, 60b) each have a contact portion (42) for sliding on the rails (16a-16b), in particular the contact portions (42) of the two guide structures (60a, 60b) extending in parallel with one another and in parallel with a wheel plane of the wheel (26) when the guide cage (28) is fastened to the wheel carrier (24).

11. Support wheel assembly according to any of the preceding claims, **characterized in that** the guide cage (28) is doubly mirror-symmetric, in particular symmetric with respect to a central plane (50) and symmetric with respect to a transverse plane (43).

12. Support wheel assembly according to any of the preceding claims, **characterized in that** the support wheel assembly (20a, 20b) further comprises a clearing device for clearing the rail (16a-16c), the clearing device being fastened to the wheel carrier (24) and/or the guide cage (28).

13. Transport arrangement (12) in the form of a tunnel formwork carriage or a mobile scaffold, comprising
- at least four support wheel assemblies (20a, 20b) according to any of the preceding claims, and
- a connecting structure (22) connecting the wheel carriers (24) of the support wheel assemblies (20a, 20b) so that the wheels (26) of two of the support wheel assemblies (20a, 20b) can be arranged on each rail (16a-16b).

## Revendications

1. Module de roue porteuse (20a, 20b) pour un dispositif de déplacement (12) sous forme d'un chariot de coffrage de tunnel ou d'un échafaudage mobile, comprenant :
- un support de roue (24) et
- une roue (26), **caractérisée en ce qu'**elle est montée de manière rotative sur le support de roue (24), le module de roue porteuse (20a, 20b) comprenant en outre une cage de guidage (28) comportant deux parties latérales (44a, 44b), la cage de guidage étant fixée au support de roue (24), une structure de guidage (60a, 60b) rigide étant montée ou agencée sur chacune des parties latérales (44a, 44b) respectivement, et les deux faces de la roue (26) dépassant les structures de guidage (60a, 60b) vers le bas, respectivement sur une surface de roulement (27) de la roue (26), afin d'empêcher le module de roue porteuse (20a, 20b) de dérailler d'un rail de roulement, le module de roue porteuse étant **caractérisé en ce que** la cage de guidage (28) forme une trémie d'entrée (32a, 32b) qui s'étend à partir de la roue (26).

2. Module de roue porteuse selon la revendication 1, **caractérisé en ce que** les deux parties latérales (44a, 44b) de la cage de guidage (28) sont réalisées sous forme de composants séparés l'un de l'autre.

3. Module de roue porteuse selon l'une des revendications précédentes, **caractérisé en ce que** la cage de guidage (28) forme, devant et derrière la roue (26), une trémie d'entrée (32a, 32b) s'élargissant chaque fois.

4. Module de roue porteuse selon l'une des revendications précédentes, **caractérisé en ce que** les parties latérales (44a, 44b) présentent chacune au moins une section d'entrée formant la trémie d'entrée (32a, 32b).

5. Module de roue porteuse selon la revendication 4, **caractérisé en ce que** les parties latérales (44a, 44b) comprennent chacune une pièce de tôle pliée (40a, 40b) sur laquelle la structure de guidage (60a, 60b) et la section d'entrée sont formées.

6. Module de roue porteuse selon l'une des revendications précédentes, **caractérisé en ce que** les deux parties latérales (44a, 44b) sont reliées par deux entretoises transversales (38), une entretoise transversale (38) s'étendant devant la roue (26) et l'autre entretoise transversale (38) s'étendant derrière la roue (26).

7. Module de roue porteuse selon l'une des revendications précédentes, **caractérisé en ce que** la cage de guidage (28) est fixée de manière amovible sur le support de roue (24), en particulier vissée.

8. Module de roue porteuse selon l'une des revendications précédentes, **caractérisé en ce que** la roue (26) est montée de manière rotative sur le support de roue (24) au moyen d'un boulon axial (54), **en ce que** le boulon axial (54) présente une partie épaissie (68a, 68b), une rainure (70) étant formée entre le support de roue (24) et la partie épaissie (68a, 68b), et **en ce que** la cage de guidage (28) s'engage dans la rainure (70).

9. Module de roue porteuse selon la revendication 8, **caractérisé en ce qu'**au moins l'une des parties latérales (44a, 44b) de la cage de guidage (28) présente un évidement de passage conique (62) à travers lequel, dans une première position de montage de la partie latérale (44a, 44b), la partie épaissie (68a, 68b) du boulon axial (54) peut être insérée, et **en ce que**, dans une seconde position dans laquelle la partie latérale (44a, 44b) est fixée au support de roue (24), la partie latérale (44a, 44b) s'engage dans la rainure (70) de sorte que la partie épaissie (68a, 68b) se trouve verrouillée par la partie latérale (44a, 44b).

10. Module de roue porteuse selon l'une des revendications précédentes, **caractérisé en ce que** les structures de guidage (60a, 60b) présentent chacune une partie de contact (42) destinée à coulisser sur le rail de roulement (16a - 16b), en particulier les parties de contact (42) des deux structures de guidage (60a, 60b) parallèles entre elles et parallèles à un plan de roue de la roue (26) lorsque la cage de guidage (28) est fixée au support de roue (24).

11. Module de roue porteuse selon l'une des revendications précédentes, **caractérisé en ce que** la cage de guidage (28) est disposée selon une double symétrie en miroir, notamment symétriquement par rapport à un plan médian (50) et symétriquement par rapport à un plan transversal (43).

12. Module de roue porteuse selon l'une des revendications précédentes, **caractérisé en ce que** le module de roue porteuse (20a, 20b) comprend en outre un dispositif de déblayage pour le déblayage du rail de roulement (16a - 16c), ledit dispositif de déblayage étant fixé sur le support de roue (24) et/ou sur la cage de guidage (28).

13. Dispositif de déplacement (12) sous forme d'un chariot de coffrage de tunnel ou d'un échafaudage mobile, comprenant :
- au moins quatre modules de roues porteuses (20a, 20b) selon l'une des revendications précédentes, et
- une structure de connexion (22) reliant les supports de roues (24) des modules de roues porteuses (20a, 20b) de sorte que sur chacun des rails de roulement (16a - 16b), chacune des roues (26) de deux des modules de roues porteuses (20a, 20b) puisse être disposée.
